# DEMANDE DE BREVET EUROPEEN

(11) **EP 1 168 790 A1**
(43) Date de publication de la demande: **02.01.2002**
(21) Numéro de dépôt: 00870146.8
(22) Date de dépôt: 28.06.2000
(51) Int. Cl.: H04M 3/436, H04M 3/48, H04M 15/00

(54) **Procédé et dispositif pour rappel automatique**

(71) Demandeur: Hendrickx, Yves, 1380 Lasne (BE)
(72) Inventeur:
(74) Mandataire: Claeys, Pierre

(57) **Abrégé**

Procédé et dispositif de téléphonie entre des téléphones appelants (1) et un téléphone appelé (2), dans lequel au moins un des téléphones appelants (1) envoie un code, qui lui est propre, au téléphone appelé (2) en même temps qu'il appelle, le procédé comprenant une mémorisation préalable, du côté du téléphone appelé (2), d'au moins un code propre à un téléphone appelant (1), un appel téléphonique à destination du téléphone appelé (2), effectué à partir d'un téléphone appelant (1) particulier, une saisie et une comparaison, du côté du téléphone appelé (2), du code envoyé par le téléphone appelant (1) particulier au(x) code(s) de téléphone(s) appelant(s) (1) mémorisé(s) préalablement, si le code du téléphone appelant (1) particulier est mémorisé préalablement du côté du téléphone appelé (2), un blocage sélectif du téléphone appelé (2) de façon à l'empêcher de prendre la communication du téléphone appelant (1) particulier, un enregistrement du code dudit téléphone appelant (1) particulier, et une utilisation du code enregistré pour rappeler automatiquement.

## Description

La présente invention concerne un procédé de téléphonie entre des téléphones appelants et un téléphone appelé, dans lequel au moins un des téléphones appelants envoie un code, qui lui est propre, au téléphone appelé en même temps qu'il appelle.

Il y a une recherche constante d'améliorer les possibilités en téléphonie, de faciliter l'utilisation du matériel et de réaliser des communications au prix le plus avantageux face au choix des compagnies de services téléphoniques.

Notamment, il y a lieu de donner aux utilisateurs les moyens d'obtenir une sélection, éventuellement automatique, du sens le moins cher dans lequel est faite une communication téléphonique. Il s'agit de permettre à un utilisateur d'appeler un autre utilisateur, dans un sens, ou par une voie, de communication relativement cher, sans avoir à payer la communication, pour demander à l'autre utilisateur de le rappeler dans un sens, ou par une voie, de communication relativement moins cher et de payer la communication.

A cet effet, le procédé de l'invention prévoit
- une mémorisation préalable, du côté du téléphone appelé, d'au moins un code propre à un téléphone appelant susdit,
- un appel téléphonique à destination du téléphone appelé, effectué à partir d'un téléphone appelant particulier,
- une saisie et une comparaison, du côté du téléphone appelé, du code envoyé par le téléphone appelant particulier au(x) code(s) de téléphone(s) appelant(s) mémorisé(s) préalablement,
- si le code du téléphone appelant particulier est mémorisé préalablement du côté du téléphone appelé,
   + un blocage sélectif du téléphone appelé de façon à l'empêcher de prendre la communication en provenance du téléphone appelant particulier,
   + un enregistrement, du côté du téléphone appelé, du code dudit téléphone appelant particulier, et
   + une utilisation du code enregistré du téléphone appelant particulier pour appeler automatiquement celui-ci.

Ainsi par exemple, un agent commercial belge en déplacement en France peut appeler sa société belge par son téléphone mobile de type GSM sans frais de communication pour demander que la société le rappelle automatiquement et sans oubli, celle-ci prenant les frais de communication à sa charge, ces frais étant présentement moins chers dans un sens Belgique - France que dans l'autre.

Avantageusement, le code du téléphone appelant est le numéro d'appel de celui-ci, notamment dans le cas de la téléphonie mobile et des réseaux du type ISDN (Integrated Service Digital Network = Réseau numérique à intégration de service).

Dans un mode de réalisation, le procédé de l'invention comprend de plus, après constat de ce que le code du téléphone appelant particulier est mémorisé préalablement du côté du téléphone appelé, une attente d'un signal particulier en provenance du téléphone appelant, à savoir soit un signal de blocage choisi pour provoquer ledit blocage sélectif du téléphone appelé, soit un signal de décrochage pour lequel il est prévu de décrocher le téléphone appelé.

De cette manière, l'agent commercial peut choisir s'il souhaite une communication immédiate à ses frais ou une communication quelque peu différée, aux frais de la société.

Suivant un mode avantageux, le procédé de l'invention comporte
- une organisation d'un répertoire des tarifs de communications téléphoniques entre les téléphones appelants et le téléphone appelé,
- une recherche du tarif le moins cher parmi les tarifs dans le sens appelant vers appelé et dans le sens appelé vers appelant, et soit
- une mise en oeuvre du signal de blocage susdit lorsque le tarif le moindre est dans le sens appelé vers appelant, et soit
- une mise hors service du signal de blocage lorsque le tarif le moindre est dans le sens appelant vers appelé.

La présente invention concerne également un dispositif de téléphonie entre des téléphones appelants et un téléphone appelé, dans lequel au moins un des téléphones appelants envoie un code, qui lui est propre, au téléphone appelé en même temps qu'il appelle.

Suivant l'invention, le dispositif comprend du côté du téléphone appelé, reliés fonctionnellement entre eux :
- un moyen de mémorisation préalable d'au moins un code propre à un téléphone appelant susdit,
- un moyen de saisie et de comparaison du code envoyé par le téléphone appelant particulier au(x) code(s) de téléphone(s) appelant(s) mémorisé(s) préalablement,
- un moyen de blocage sélectif du téléphone appelé, agencé de façon à l'empêcher de prendre la communication en provenance du téléphone appelant particulier,
- un moyen d'enregistrement du code dudit téléphone appelant particulier, et
- un moyen d'appel automatique agencé pour utiliser le code enregistré du téléphone appelant particulier, afin d'appeler celui-ci.

D'autres détails et particularités de l'invention ressortiront des revendications secondaires et de la description des procédé et dispositif ainsi que des dessins qui sont annexés au présent mémoire et qui illustrent, à titre d'exemples non limitatifs, ledit procédé et des formes de réalisation particulières du dispositif suivant l'invention.

La figure 1 montre schématiquement un dispositif de l'invention pour une application générale du procédé de l'invention.

La figure 2 montre schématiquement un dispositif de l'invention dans une application entre deux pays.

La figure 3 montre schématiquement un dispositif de l'invention dans une application particulière de réseaux hertzien et câblé.

Dans les différentes figures, les mêmes notations de référence désignent des éléments identiques ou analogues.

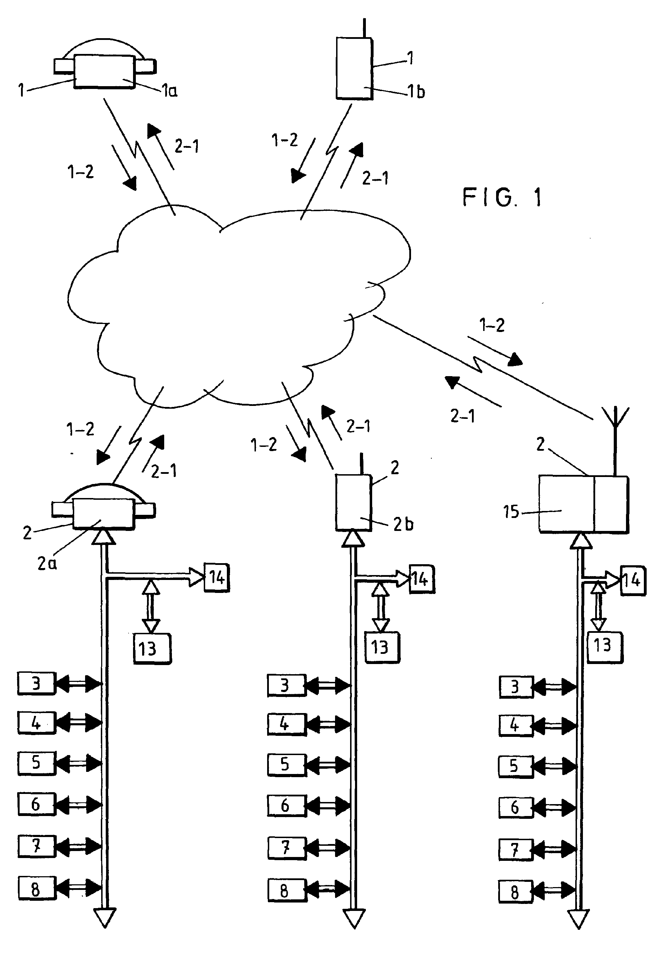

Le dispositif de l'invention, pour de la téléphonie entre des téléphones appelants 1 et un téléphone appelé 2 (figure 1), prévoit qu'au moins un des téléphones appelants 1, dans le sens des flèches 1-2 envoie un code, qui lui est propre, au téléphone appelé 2 en même temps qu'il appelle.

Dans le cadre de l'invention, les téléphones appelants 1 et appelés 2 peuvent être aussi bien des téléphones mobiles 1b ou respectivement 2b fonctionnant par réseau(x) hertzien(s), notamment du type GSM, que des téléphones fixes de réseau(x) câblé(s) 1a ou respectivement 2a. De plus, un téléphone appelant 1 susdit peut avoir les fonctions d'un téléphone appelé précité 2 et vice versa.

Ledit dispositif comprend à cet effet du côté du téléphone appelé 2, reliés fonctionnellement entre eux par exemple par une ou des voies d'intercommunication (= bus), un moyen de mémorisation préalable 3 d'au moins un code propre à un téléphone appelant 1 susdit, un moyen de saisie et de comparaison 4 du code envoyé par le téléphone appelant particulier 1 et du ou des codes de téléphones appelants mémorisés préalablement, un moyen de blocage sélectif 5 du téléphone appelé 2, agencé de façon à empêcher celui-ci de prendre la communication en provenance du téléphone appelant particulier 1, un moyen d'enregistrement 6 du code dudit téléphone appelant particulier 1, et un moyen d'appel automatique 7 agencé pour utiliser le code enregistré du téléphone appelant particulier 1, afin d'appeler celui-ci dans un sens 2-1 de la flèche.

De plus, le dispositif de l'invention peut comprendre un moyen 8 de production d'un signal de blocage, choisi pour bloquer sélectivement le téléphone appelé 2, et/ou d'un signal de décrochage pour lequel il est prévu de décrocher le téléphone appelé 2.

Avantageusement, le moyen d'appel automatique 7 précité est agencé pour appeler le téléphone appelant 1 et le mettre en communication soit avec le téléphone appelé 2 lui-même soit avec un autre téléphone 2 déterminé associé.

En outre, le dispositif de l'invention peut comporter, reliés fonctionnellement entre eux et aux moyens précités d'un téléphone appelé 2, une mémoire 13 pour un répertoire des tarifs de communications téléphoniques entre les téléphones appelants 1 et le téléphone appelé 2, et un moyen de recherche 14 du tarif le moins cher parmi les tarifs dans le sens appelant 1 vers appelé 2 et dans le sens appelé 2 vers appelant 1, ce moyen de recherche 14 étant agencé pour produire un signal de blocage susdit lorsque le tarif le moindre est dans le sens appelé 2 vers appelant 1, et pour mettre hors service le signal de blocage lorsque le tarif le moindre est dans le sens appelant 1 vers appelé 2.

Le dispositif suivant l'invention comporte de préférence au moins un poste téléphonique fixe 15 à antenne, connu en soi, agencé pour recevoir des communications par réseau(x) hertzien(s) ainsi que par réseau(x) câblé(s) et pour également recevoir une communication d'un réseau hertzien et la transférer à un réseau câblé et vice versa. Ce poste fixe 15 peut avoir les mêmes fonctionnalités qu'un téléphone appelé 2 susdit. Un tel poste fixe 15 peut également être relié à la centrale téléphonique par exemple d'une société commerciale pour en atteindre les services internes par réseau hertzien par un téléphone appelant 1b de type GSM. De plus, le poste fixe 15 est agencé pour permettre que l'utilisateur de ce téléphone 1b en liaison avec le poste fixe 15 puisse former un numéro d'un téléphone câblé et atteindre ce dernier via le poste fixe 15.

Dans le procédé de l'invention, on organise au préalable, du côté du téléphone appelé 2, une mémorisation dans le moyen de mémorisation 3 d'au moins un code propre à un téléphone appelant 1 participant au dispositif et au procédé.

Lors d'un appel téléphonique, effectué à partir d'un téléphone appelant 1 particulier, à destination du téléphone appelé 2, on réalise, du côté de celui-ci et sans le décrocher, par le moyen de saisie 4, une saisie et une comparaison du code envoyé par le téléphone appelant 1 particulier et des codes de téléphones appelants mémorisés préalablement.

Si le code du téléphone appelant particulier 1 est y mémorisé, le procédé de l'invention comporte un blocage sélectif du téléphone appelé 2 de façon à l'empêcher de prendre la communication en provenance du téléphone appelant particulier. Simultanément, on fait un enregistrement du code dudit téléphone appelant particulier 1 dans le moyen d'enregistrement 6. On utilise ensuite le code enregistré du téléphone appelant particulier 1 pour appeler automatiquement celui-ci.

Le code du téléphone appelant 1 peut être avantageusement le numéro d'appel de celui-ci, transmis présentement le plus souvent dans les réseaux modernes, si l'abonné l'accepte, et connu sous le vocable de CLIP (Calling Line Identification Presentation = présentation de l'identification de la ligne appelante).

En variante avantageuse, après avoir constaté que le code du téléphone appelant particulier 1 est mémorisé préalablement du côté du téléphone appelé 2, on attend du téléphone 1 un signal particulier que l'utilisateur de celui-ci peut choisir entre deux : soit un signal de blocage par lequel il peut provoquer lui-même ledit blocage sélectif du téléphone appelé 2, et forcer ainsi ce dernier à rappeler, soit un signal de décrochage par lequel l'utilisateur du téléphone 1 demande de décrocher sans délai le téléphone appelé 2.

Le signal de blocage susdit, que peut provoquer l'appelant, peut consister en un raccrochage du téléphone appelant 1 avant d'atteindre un nombre x de sonneries déterminé, qui peut être de trois par exemple parce qu'il est aisé de les compter, parce que le code a un temps suffisant pour passer et parce que la manoeuvre est naturelle.

Le signal de décrochage précité, que peut également provoquer l'appelant, peut consister en un maintien décroché du téléphone appelant 1 au-delà du nombre de sonneries déterminé.

Il peut être avantageux également que le signal de blocage susdit puisse être enclenché en outre du côté du téléphone appelé 2, par une commande de son utilisateur, au cas où celui-ci préfère par exemple prendre de toute façon la communication à sa charge.

Suivant un mode avantageux, le procédé de l'invention peut comporter une utilisation du signal de blocage pour provoquer sélectivement un appel du téléphone appelant 1 soit par le téléphone appelé 2 lui-même soit par un autre téléphone déterminé 2 associé. Ceci permet par exemple de délester un téléphone appelé 2 qui n'est alors consacré qu'à recevoir les appels et n'est pas occupé à faire des appels qui le rendent inaccessible. Ce téléphone 2 associé peut être agencé pour éventuellement agir par l'intermédiaire d'un autre réseau téléphonique câblé ou hertzien; dans ce cas il pourrait être du type poste fixe à antenne 15 susdit.

Le dispositif de l'invention tel que décrit peut être réalisé par un homme de métier en utilisant les moyens actuels connus en téléphonie, en micro-électronique et en informatique associée. En conséquence, une programmation adéquate pourra être effectuée en fonction des options que l'on souhaitera donner à l'utilisateur.

Comme déjà mentionné, l'invention peut permettre de rechercher des avantages tarifaires et/ou de facturation.

A cet effet, on peut prévoir, dans la mémoire 13 une organisation d'un répertoire des tarifs de communications téléphoniques entre les téléphones appelants 1 et le téléphone appelé 2. Sur base de ce répertoire, le moyen de recherche 14 peut effectuer une recherche du tarif le moins cher parmi les tarifs dans le sens appelant vers appelé et dans le sens appelé vers appelant, et ledit moyen de recherche 14 peut mettre en oeuvre le signal de blocage susdit lorsque le tarif le moindre est dans le sens appelé vers appelant, ou mettre hors service le signal de blocage lorsque le tarif le moindre est dans le sens appelant vers appelé.

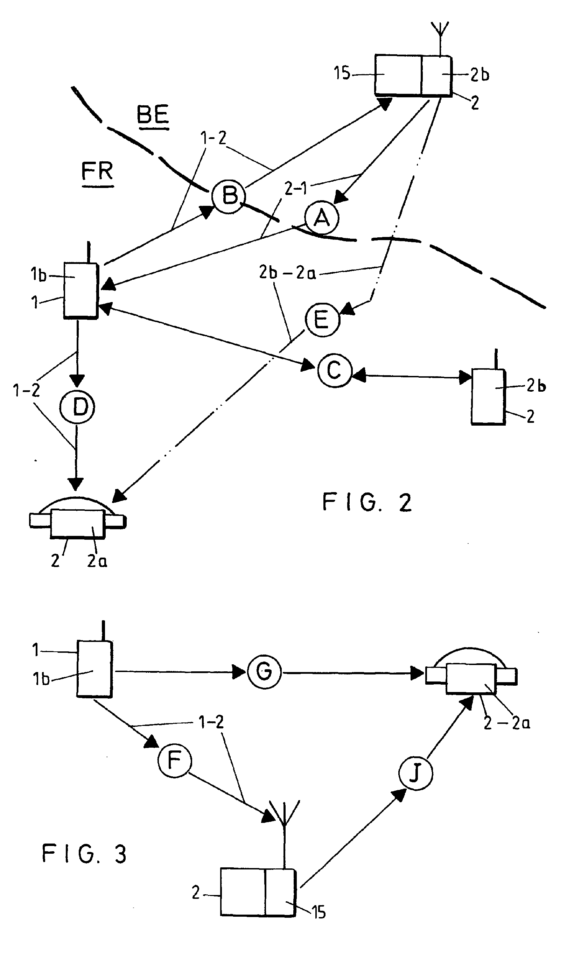

A titre d'exemple, on peut citer le cas des coûts des communications (tableau 1 et figure 2) entre la Belgique (BE) et la France (FR) en téléphonie mobile de type GSM ou mixte en fonction de l'opérateur (compagnie de téléphone).

**Tableau 1**

| (en BEF htva) | | | | | |
|---|---|---|---|---|---|
| d'un GSM belge | à un GSM belge | par un opérateur 1 | par un opérateur 2 | par un opérateur 3 | Tarif |
| en BE | en FR | 18,- | 15,- | 10,- | A |
| en FR | en BE | 45,- | 45,- | 45,- | B |
| en FR | en FR | 62,- | 59,- | 54,- | C |
| | | | | | |
| d'un GSM belge en FR | à un réseau fixe en FR | 22,- | 22,- | 22,- | D |

Par le procédé de l'invention, l'utilisateur du GSM belge appelant 1b (figure 2) en France appelle le GSM 2b en Belgique et raccroche par exemple après trois sonneries, de sorte qu'il n'y a pas de frais d'appel à un tarif défavorable B de France à Belgique. Le GSM 2b appelé a eu le temps de capter le code (numéro d'appel) de l'appelant 1b et entame une procédure d'appel de celui-ci au tarif favorable A de Belgique à France qui dépend de l'opérateur qui gère le GSM.

Si l'utilisateur du GSM belge appelant 1b (figure 2) situé en France souhaite appeler un téléphone fixe 2a en France, par une voie directe il subira le tarif défavorable D. Pour éviter ce tarif, l'appelant du GSM 1b appelle le poste fixe à antenne 15 en Belgique (sens 1-2) sans qu'il n'y ait décrochage à cet endroit, donc sans frais. Suivant l'invention, le poste 15 rappelle automatiquement le GSM 1b dans le sens 2-1 et établi une communication au tarif A favorable. L'appelant du GSM 1b peut à ce moment utiliser le poste fixe 15 en tant que centrale téléphonique privée reliée au réseau câblé, et composer le numéro du poste fixe 2a en France pour atteindre celui-ci à un tarif E (non repris dans le tableau) de l'ordre de 4 BEF htva, à ajouter donc au tarif A. Les conditions sont favorables dans le cas de l'opérateur 3 (10,- + 4,- BEF au lieu de 22,-) ou, en moindre importance, avec l'opérateur 2 (15,- + 4,- BEF au lieur de 22,-).

Les procédé et dispositif de l'invention peuvent également être mis en oeuvre, en utilisant un poste fixe 15 à antenne agencé pour recevoir des communications par réseau(x) hertzien(s) tout autant que câblé(s), pour profiter de tarifs favorables dans des communications nationales (tableau 2).

**Tableau 2**

| (en BEF htva) | | | | | |
|---|---|---|---|---|---|
| | | par un opérateur 1 | par un opérateur 2 | par un opérateur 3 | Tarif |
| d'un GSM | à un GSM | 3,- | 2,33,- | 4,- | F |
| d'un GSM | à un câblé | 17,- | 7,- | 4,- | G |
| d'un câblé | à un GSM | 17,- | 17,- | 17,- | H |
| | | | | | |
| d'un GSM d'un opérateur | à un GSM d'un autre opérateur | 25,- | 7,- | 4,- | J |

Il suffit d'appliquer (figure 3) le procédé audit poste fixe 15. Une communication d'un GSM 1b vers un téléphone 2a de réseau câblé à un tarif G peut être alors transformée en communication du GSM vers le poste fixe 15 à antenne utilisé comme GSM 2b, à un tarif F, qui rappelle le GSM 2b, plus la communication entre le poste fixe 15 en tant qu'appareil câblé, et qui permet d'appeler le téléphone 2a de réseau câblé à un tarif de communication câblée.

Il doit être entendu que l'invention n'est nullement limitée aux formes de réalisation décrites et que bien des modifications peuvent être apportées à ces dernières sans sortir du cadre des revendications.

Usuellement, l'utilisateur du téléphone appelant 1 est celui qui connaît le tarif le plus avantageux de la zone ou il se trouve. Il est mieux à même alors d'organiser par exemple le répertoire d'un poste fixe à antenne 15, utilisé comme téléphone appelé 2, auquel il est associé, comme dans le cas cité du délégué commercial muni d'un GSM 1b et en rapport avec son bureau par l'intermédiaire du poste fixe 15.

La liste des codes des téléphones appelants 1 qui participent au procédé de l'invention peut être stockée sur la carte SIM (Subscriber Identify Module = module d'identification d'abonné) dans le cas d'un téléphone appelé 2 de type GSM. Un caractère d'identification particulier peut être attribué à ces codes pour les distinguer d'autres codes ou numéros stockés sur cette même carte.

Les moyens et fonctions mis en oeuvre pour réaliser l'invention peuvent être agencés en tout ou en partie soit dans le téléphone correspondant, soit dans une centrale téléphonique privée associée audit téléphone, soit encore dans le central téléphonique du ou de chaque réseau câblé et/ou hertzien qui choisit de mettre la présente invention à disposition de ses abonnés.

L'invention peut avoir une application particulièrement intéressante pour les réseaux mobiles ou fixes de données. Ainsi, dans le cas de réseaux "INTRANET", il permet une facturation centralisée des appels au niveau des serveurs plutôt qu'une facturation décentralisée.

L'invention peut encore être utilisée comme système d'alarme. Si l'on équipe par exemple dix machines d'une usine d'une plate-forme GSM pour signaler une panne sur l'une quelconque d'entre elles à un préposé, la plate-forme GSM peut appeler une centrale qui, au lieu de rappeler ladite plate-forme peut être programmée pour appeler automatiquement le préposé et lui signaler la machine en panne.

## Revendications

1. Procédé de téléphonie entre des téléphones appelants (1) et un téléphone appelé (2), dans lequel au moins un des téléphones appelants (1) envoie un code, qui lui est propre, au téléphone appelé (2) en même temps qu'il appelle, le procédé étant ***caractérisé en ce qu***'il comprend :
- une mémorisation préalable, du côté du téléphone appelé (2), d'au moins un code propre à un téléphone appelant (1) susdit,
- un appel téléphonique à destination du téléphone appelé (2), effectué à partir d'un téléphone appelant (1) particulier,
- une saisie et une comparaison, du côté du téléphone appelé (2), du code envoyé par le téléphone appelant (1) particulier au(x) code(s) de téléphone(s) appelant(s) (1) mémorisé(s) préalablement,
- si le code du téléphone appelant (1) particulier est mémorisé préalablement du côté du téléphone appelé (2),
+ un blocage sélectif du téléphone appelé (2) de façon à l'empêcher de prendre la communication en provenance du téléphone appelant (1) particulier,
+ un enregistrement, du côté du téléphone appelé (2), du code dudit téléphone appelant (1) particulier, et
+ une utilisation du code enregistré du téléphone appelant (1) particulier pour appeler automatiquement celui-ci.

2. Procédé suivant la revendication 1, **caractérisé en ce qu'**il comprend comme code du téléphone appelant (1) le numéro d'appel de celui-ci.

3. Procédé suivant la revendication 1, **caractérisé en ce qu'**il comprend de plus, après constat de ce que le code du téléphone appelant particulier est mémorisé préalablement du côté du téléphone appelé (2), une attente d'un signal particulier en provenance dudit téléphone appelant (1) :
- soit un signal de blocage choisi pour provoquer ledit blocage sélectif du téléphone appelé (2).
- soit un signal de décrochage pour lequel il est prévu de décrocher le téléphone appelé (2).

4. Procédé suivant la revendication 3, **caractérisé en ce que** :
- le signal de blocage susdit consiste en un raccrochage du téléphone appelant (1) après un nombre de sonneries déterminé,
- le signal de décrochage précité consiste en un maintien décroché du téléphone appelant (1) au-delà du nombre de sonneries déterminé.

5. Procédé suivant l'une ou l'autre des revendications 3 et 4, **caractérisé en ce que** le signal de blocage susdit consiste en une commande de l'utilisateur du téléphone appelé (2).

6. Procédé suivant l'une quelconque des revendications 1 à 5, **caractérisé en ce qu'**il comporte une utilisation du signal de blocage pour provoquer sélectivement un appel du téléphone appelant (1) soit par le téléphone appelé (2) lui-même soit par un autre téléphone déterminé (2) associé.

7. Procédé suivant l'une quelconque des revendications 1 à 5, **caractérisé en ce qu'**il comporte :
- une organisation d'un répertoire des tarifs de communications téléphoniques entre les téléphones appelants (1) et le téléphone appelé (2),
- une recherche du tarif le moins cher parmi les tarifs dans le sens appelant vers appelé et dans le sens appelé vers appelant, et
- une mise en oeuvre du signal de blocage susdit lorsque le tarif le moindre est dans le sens appelé vers appelant, et
- une mise hors service du signal de blocage lorsque le tarif le moindre est dans le sens appelant vers appelé.

8. Dispositif de téléphonie entre des téléphones appelants (1) et un téléphone appelé (2), dans lequel au moins un des téléphones appelants (1) envoie un code, qui lui est propre, au téléphone appelé (2) en même temps qu'il appelle, le dispositif étant ***caractérisé en ce qu***'il comprend du côté du téléphone appelé (2), reliés fonctionnellement entre eux :
- un moyen de mémorisation préalable (3) d'au moins un code propre à un téléphone appelant (1) susdit,
- un moyen de saisie et de comparaison (4) du code envoyé par le téléphone appelant (1) particulier au(x) code(s) de téléphone(s) appelant(s) mémorisé(s) préalablement,
- un moyen de blocage sélectif (5) du téléphone appelé, agencé de façon à l'empêcher de prendre la communication en provenance du téléphone appelant (1) particulier,
- un moyen d'enregistrement (6) du code dudit téléphone appelant (1) particulier, et
- un moyen d'appel automatique (7) agencé pour utiliser le code enregistré du téléphone appelant (1) particulier, afin d'appeler celui-ci.

9. Dispositif suivant la revendication 8, **caractérisé en ce qu'**il comprend de plus un moyen (8) de production d'un signal particulier :
- soit un signal de blocage choisi pour provoquer ledit blocage sélectif du téléphone appelé (2),
- soit un signal de décrochage pour lequel il est prévu de décrocher le téléphone appelé (2).

10. Dispositif suivant l'une ou l'autre des revendications 8 et 9, **caractérisé en ce que** le moyen d'appel automatique (7) est agencé pour mettre en communication le téléphone appelant (1) soit avec le téléphone appelé (2) lui-même soit avec un autre téléphone déterminé (2) associé.

11. Dispositif suivant l'une quelconque des revendications 8 à 10, **caractérisé en ce qu'**il comporte en outre, reliés fonctionnellement :
- une mémoire (13) pour un répertoire des tarifs de communications téléphoniques entre les téléphones appelants (1) et le téléphone appelé (2),
- un moyen de recherche (14) du tarif le moins cher parmi les tarifs dans le sens appelant vers appelé et dans le sens appelé vers appelant, agencé pour produire un signal de blocage susdit lorsque le tarif le moindre est dans le sens appelé vers appelant, et pour mettre hors service le signal de blocage lorsque le tarif le moindre est dans le sens appelant vers appelé.

12. Dispositif suivant l'une quelconque des revendications 8 à 11, **caractérisé en ce que** les téléphones appelants (1) et appelés (2) sont aussi bien des téléphones mobiles par réseau(x) hertzien(s), notamment du type GSM, que des téléphones fixes.

13. Dispositif suivant la revendication 12, **caractérisé en ce qu'**il comporte au moins un poste fixe (15) à antenne agencé pour recevoir des communications par réseau(x) hertzien(s) ainsi que par réseau(x) câblé(s).
